# EUROPÄISCHE PATENTSCHRIFT

(11) **EP 2 516 881 B1**
(45) Veröffentlichungstag und Bekanntmachung des Hinweises auf die Patenterteilung: **18.10.2017**
(21) Anmeldenummer: 10795308.5
(22) Anmeldetag: 15.12.2010
(51) Int. Cl.: F16D 65/14, B60T 17/08

(54) **SCHEIBENBREMSE**
DISC BRAKE
FREIN À DISQUE

(30) Priorität: 21.12.2009 DE 102009059817
(43) Veröffentlichungstag der Anmeldung: 31.10.2012
(73) Patentinhaber: KNORR-BREMSE Systeme für Nutzfahrzeuge GmbH, 80809 München (DE)
(72) Erfinder: DEROUAULT, Sylvain, F-14100 Hermival les Vaux (FR); HERICHER, Stéphane, F-14670 Basseneville (FR)
(74) Vertreter: Mattusch, Gundula
(86) Internationale Anmeldenummer: PCT/EP2010/069744
(87) Internationale Veröffentlichungsnummer: WO 2011/085892

(56) Entgegenhaltungen:
- DE-B3-102006 033 254
- DE-C1- 19 506 955
- US-A1- 2008 047 787

## Beschreibung

Die vorliegende Erfindung betrifft eine pneumatisch betätigbare Scheibenbremse gemäß den Merkmalen des Oberbegriffs des Anspruchs 1.

Eine solche pneumatisch betätigbare Scheibenbremse ist beispielsweise aus der DE 195 06 955 C1, der DE 10 2008 004 896 A1 oder der DE 10 2006 010 215 B3 bekannt. Dabei ist ein mit Druckluft beaufschlagbarer Bremszylinder als Bremskrafterzeuger auf einen Flansch eines Bremssattels befestigt.

Neben dem Bremszylinder werden auf diesem Flansch des Bremssattels oftmals weitere Funktionsteile befestigt, so dass dadurch der Bauraum für einen zu montierenden Bremszylinder oder die Montagemöglichkeit weiterer Funktionsteile eingeschränkt wird.

Aufgabe der vorliegenden Erfindung ist es, eine pneumatisch betätigbare Scheibenbremse so weiter zu entwickeln, dass sie bauraumoptimiert ist und die auf dem Bremssattel montierten Funktionsteile gut erreichbar sind.

Diese Aufgabe wird durch eine Scheibenbremse mit den Merkmalen des Anspruchs 1 gelöst.

Durch die erfindungsgemäße Ausgestaltung des Bremszylinders, der zumindest im Überdeckungsbereich mit dem mindestens einen Funktionsteil eingedellt ausgebildet ist, können auch größer dimensionierte Bremszylinder bauraumoptimiert auf dem Bremssattel montiert werden.

Weitere vorteilhafte Ausbildungen der Erfindung sind in den Unteransprüchen gekennzeichnet.

Gemäß einer Ausführungsvariante der Erfindung erstreckt bzw. erstrecken sich die Eindellung(en) in den Innenraum des Bremszylinders, wobei die Eindellung(en) derart geformt sind, dass die Membran in Wirkrichtung frei oder nahezu frei bewegbar ist. Dadurch wird verhindert, dass die Eindellungen den Bewegungsbereich der Membran in einem für den Kraftverlauf des mit der Membran gekoppelten Zylinderstößels relevanten Maße einengen.

Gemäß einer weiteren Ausführungsvariante der Erfindung ist eine Mantelfläche des dem Flansch des Bremssattels nahen Gehäuseteils des Bremszylinders mit mindestens einem eingedellten Bereich ausgebildet. Dadurch kann der Durchmesser des Bremszylinders im Wesentlichen beibehalten werden.

Ein Ausführungsbeispiel der Erfindung wird nachfolgend anhand der beigefügten Zeichnungen beschrieben. Es zeigen:
- Figur 1: eine schematische perspektivische Ansicht eines auf einen Bremssattel neben zwei Funktionsteilen montierten Bremszylinders,
- Figur 2: eine schematische perspektivische Ansicht eines Gehäuseteils des Bremszylinders,
- Figur 3: eine Draufsicht auf das in Figur 2 gezeigte Gehäuseteil und
- Figur 4: eine Seitenschnittansicht des Gehäuseteils aus Figur 3.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse und anderer Gegenstände. Diese Begriffe sind nicht einschränkend zu verstehen, das heißt, durch verschiedene Arbeitsstellungen oder die spiegelsymmetrische Auslegung oder dergleichen können sich diese Bezüge ändern.

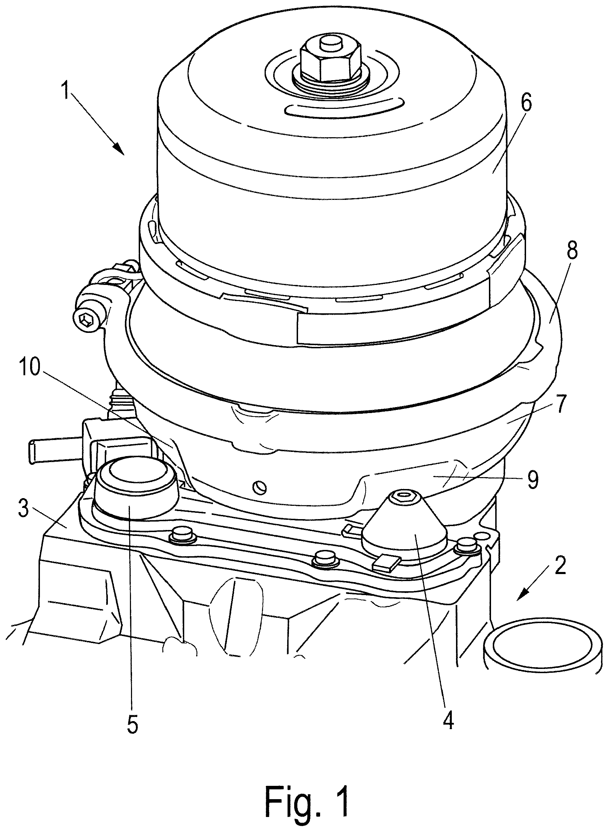

In der Figur 1 ist mit dem Bezugszeichen 1 insgesamt ein Bremszylinder bezeichnet, der an einem Flansch 3 eines Bremssattels 2 befestigt ist. Der Bremszylinder 1 weist ein Gehäuse 6,7 auf, das bevorzugt zweiteilig ausgebildet ist, wobei die beiden Gehäuseteile 6, 7 über ein Spannband 8 zusammen gehalten werden oder miteinander vercrimpt sind. Beide Gehäuseteile 6, 7 sind topfartig ausgebildet, wobei die Mantelflächen der Gehäuseteile 6, 7 an den einander zugewandten Rändern mit einem Flansch 14 versehen sind, der von dem Spannband 8 umgreifbar ist.

Der Bremszylinder 1 ist bevorzugt mit dem Flansch 3 des Bremssattels 2 verschraubt. Des Weiteren ist auf dem Flansch 3 des Bremssattels 2 neben dem Bremszylinder 1 mindestens ein weiteres Funktionsteil 4, 5 angeordnet, beispielsweise in Gestalt eines Nachstellers 4 für eine Zuspannvorrichtung zur Druckbeaufschlagung eines Bremsbelags und/oder eines als Anschlussstück für eine Verschleißanzeige ausgebildeten Funktionsteils 5.

Um die zur Verfügung stehende Fläche auf dem Flansch 3 des Bremssattels 2 optimal ausnutzen zu können, muss der Bremszylinder 1 sehr nahe an die Funktionsteile 4, 5 herangeführt sein. Dazu ist der Bremszylinder 1 mit mindestens einer Eindellung 9, 10 ausgebildet, so dass der Bremszylinder 1 und das bzw. die Funktionsteile(e) 4, 5 sich teilweise überdecken, wobei die Funktionsteile 4, 5 durch die Ausbildung der Eindellungen 9, 10 des Bremszylindergehäuses trotzdem optimal zugänglich sind. Außerdem kann durch eine derartige Formgebung des Bremszylindergehäuses eine Verringerung des Durchmessers des Bremszylinders 1 und damit eine Verringerung der maximal auf einen axial in dem Bremszylinder 1 verschiebbaren Zylinderstößel wirkenden Kraft vermieden werden. Der Zylinderstößel wirkt dabei auf einen vorzugsweise exzentrisch an dem Bremssattel 2 gelagerten Bremsdrehhebel (nicht gezeigt), der beim Betätigen der Bremse durch eine axiale Bewegung des Zylinderstößels verschwenkt wird.

Die Eindellungen erstrecken sich dabei in den Innenraum des Bremszylinders 1, aber nicht oder nur geringfügig in den Bewegungsbereich der Membran. Wichtig ist, dass die Eindellungen den Bewegungsbereich der Membran nur in einem für den Kraftverlauf des mit der Membran gekoppelten Zylinderstößels nicht relevanten Maße einengen.

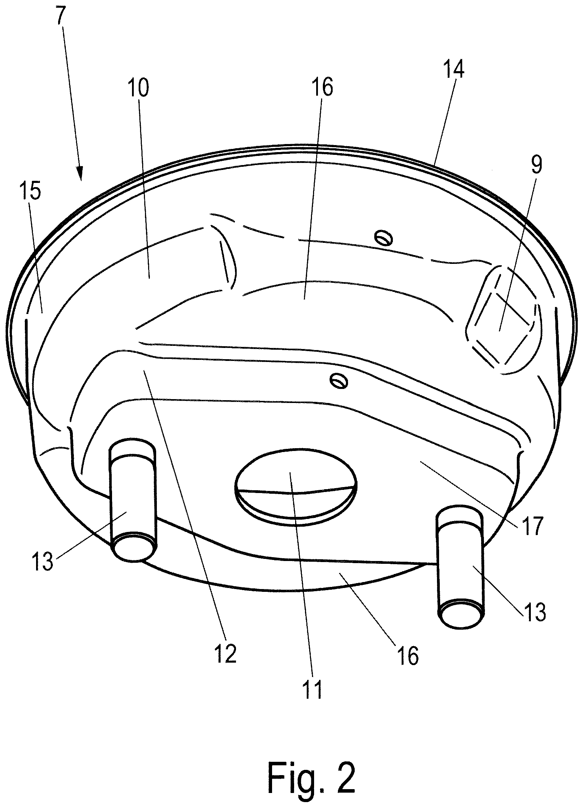

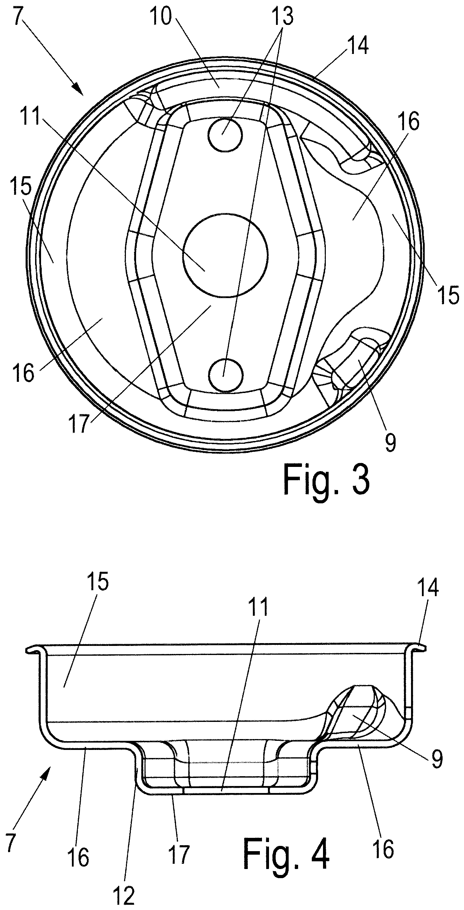

Wie in den Figuren 2 bis 4 gezeigt, ist bei dem hier gezeigten mehrteiligen Bremszylindergehäuse der dem Flansch 3 des Bremssattels 2 nahe Gehäuseteil 7 des Bremszylinders 1 mit zwei Eindellungen 9, 10 ausgebildet. Diese eingedellten Bereiche befinden sich insbesondere im Bereich eines abgerundeten Randes zwischen einem Boden 16 des Gehäuseteils 7 und einer zylinderförmigen Mantelfläche 15 dieses Gehäuseteils 7 und sind bevorzugt parallel zu dem abgerundeten Rand des Gehäuseteils 7 positioniert.

Zur Befestigung des Bremszylinders 1 erhebt sich aus dem Boden 16 des dem Flansch 3 des Bremssattels 2 nahen Gehäuseteils 7 des Bremszylinders 1 ein Aufsatz 12, aus dem senkrecht zwei an diesem angeformte Hülsen 13 herausstehen, die in (nicht gezeigte) Bohrungen in dem Flansch 3 des Bremssattels 2 hineinragen und als Führung für Schrauben zur Verschraubung des Bremszylindergehäuses 6, 7 mit dem Bremssattel 2 dienen. Außerdem ist dieser Aufsatz 12 mit einer zentralen Bohrung 11 für den axial verschiebbaren Zylinderstößel versehen.

Die Eindellungen 9, 10 sind bevorzugt als Abflachungen ausgebildet, denkbar ist aber auch eine außenseitig konkave Ausbildung, je nach Ausgestaltung des Funktionsteils 4, 5, an welches der Bremszylinder 1 möglichst nah montiert werden soll. Bevorzugt sind bei der Ausbildung mehrerer eingedellter Bereiche die Eindellungen 9, 10 voneinander beabstandet angeordnet, um die zylinderförmige Gestaltung des Zylindergehäuses im Wesentlichen beizubehalten und trotzdem einen kompakten Aufbau der Scheibenbremse zu erreichen.

Die Eindellungen 9, 10 sind bevorzugt durch Prägen des Gehäuseteils 7 gebildet, andere Umformungsverfahren sind jedoch ebenfalls denkbar.

### Bezugszeichenliste

- Bremszylinder: 1
- Bremssattel: 2
- Flansch: 3
- Funktionsteil: 4
- Funktionsteil: 5
- Gehäuse: 6
- Gehäuse: 7
- Spannband: 8
- Eindellung: 9
- Eindellung: 10
- Bohrung: 11
- Aufsatz: 12
- Hülsen: 13
- Flansch: 14
- Mantelfläche: 15
- Boden: 16
- Aufsatzboden: 17

## Patentansprüche

1. Pneumatisch betätigbare Scheibenbremse, mit einem eine Bremsscheibe übergreifenden Bremssattel (2), wobei an einem Flansch (3) des Bremssattels (2) ein mit Druckluft beaufschlagbarer Bremszylinder (1) mit einer innenliegenden Membran und einem mit der Membran gekoppelten Zylinderstößel sowie mindestens ein weiteres Funktionsteil (4, 5) befestigt sind, wobei eine Mantelfläche (15) eines dem Flansch (3) des Bremssattels (2) nahen Gehäuseteils (7) des Bremszylinders (1) zumindest im Überdeckungsbereich axial zum Bremszylinder mit dem mindestens einen Funktionsteil (4, 5) mit mindestens einer Eindellung (9, 10) versehen ist, **dadurch gekennzeichnet, dass** die mindestens eine Eindellung (9, 10) im Bereich eines abgerundeten Randes zwischen einem Boden (16) des Gehäuseteils (7) und einer zylinderförmigen Mantelfläche (15) dieses Gehäuseteils (7) vorgesehen ist.

2. Scheibenbremse nach Anspruch 1, **dadurch gekennzeichnet, dass** die Eindellung(en) (9, 10) sich in den Innenraum des Bremszylinders (1) erstrecken, wobei die Eindellung(en) (9, 10) derart geformt sind, dass die Membran in Wirkrichtung frei oder nahezu frei bewegbar ist.

3. Scheibenbremse nach einem der vorstehenden Ansprüche, **dadurch gekennzeichnet, dass** das Gehäuse des Bremszylinders (1) mehrteilig, insbesondere zweiteilig ausgebildet ist.

4. Scheibenbremse nach einem der vorstehenden Ansprüche, **dadurch gekennzeichnet, dass** sich aus dem Boden (16) des dem Flansch (3) des Bremssattels (2) nahen Gehäuseteils (7) des Bremszylinders (1) ein Aufsatz (12) mit einer zentralen Bohrung (11) für den axial verschiebbaren Zylinderstößel erhebt.

5. Scheibenbremse nach Anspruch 4, **dadurch gekennzeichnet, dass** die mindestens eine Eindellung (9, 10) des Bremszylinders (1) derart ausgebildet ist, dass das Volumen des Bremszylinders (1) oberhalb eines Schwellwertes liegt, bei dem die auf den Zylinderstößel ausübbare Kraft einen Mindestwert nicht unterschreitet.

6. Scheibenbremse nach einem der vorstehenden Ansprüche, **dadurch gekennzeichnet, dass** die mindestens eine Eindellung (9, 10) des Bremszylinders (1) als Abplattung ausgebildet ist.

7. Scheibenbremse nach einem der vorstehenden Ansprüche 1 bis 5, **dadurch gekennzeichnet, dass** die mindestens eine Eindellung (9, 10) des Bremszylinders (1) als von außen betrachtet konkave Eindellung ausgebildet ist.

8. Scheibenbremse nach einem der vorstehenden Ansprüche, **dadurch gekennzeichnet, dass** der Bremszylinder (1) mindestens zwei Eindellungen (9, 10) aufweist, die voneinander beabstandet angeordnet sind.

9. Scheibenbremse nach einem der vorstehenden Ansprüche, **dadurch gekennzeichnet, dass** die mindestens eine Eindellung (9, 10) des Bremszylinders (1) durch Prägen gebildet ist.

## Claims

1. Pneumatically actuable disc brake comprising a brake caliper (2) extending around a brake disc, wherein a brake cylinder (1), which can be subjected to compressed air and has an internal diaphragm and a cylinder plunger coupled to the diaphragm, is fastened, together with at least one further functional part (4, 5), to a flange (3) of the brake caliper (2), wherein a lateral surface (15) of a housing part (7) of the brake cylinder (1) located close to the flange (3) of the brake caliper (2) is provided with at least one indentation (9, 10) at least in the region of overlap, axially with respect to the brake cylinder, with the at least one functional part (4, 5), **characterized in that** the at least one indentation (9, 10) is provided in the region of a rounded edge between a base (16) of the housing part (7) and a cylindrical lateral surface (15) of this housing part (7).

2. Disc brake according to Claim 1, **characterized in that** the indentation(s) (9, 10) extend(s) into the interior of the brake cylinder (1), the indentation(s) (9, 10) being formed in such a way that the diaphragm is movable freely, or practically freely, in the operating direction.

3. Disc brake as claimed in either one of the preceding claims, **characterized in that** the housing of the brake cylinder (1) has a multi-part, in particular a two-part, configuration.

4. Disc brake as claimed in any one of the preceding claims,
**characterized in that** an elevated portion (12) having a central bore (11) for the axially displaceable cylinder plunger rises from the base (16) of the housing part (7) of the brake cylinder (1) close to the flange (3) of the brake caliper (2).

5. Disc brake as claimed in Claim 4, **characterized in that** the at least one indentation (9, 10) of the brake cylinder (1) is/are configured in such a way that the volume of the brake cylinder (1) lies above a threshold value at which the force which can be exerted on the cylinder plunger does not fall below a minimum value.

6. Disc brake as claimed in any one of the preceding claims, **characterized in that** the at least one indentation (9, 10) of the brake cylinder (1) has a flattened configuration.

7. Disc brake as claimed in any one of the preceding Claims 1 to 5, **characterized in that** the at least one indentation (9, 10) of the brake cylinder (1) is configured as a concave indentation when viewed from the outside.

8. Disc brake as claimed in any one of the preceding claims, **characterized in that** the brake cylinder (1) has at least two indentations (9, 10) which are spaced apart from one another.

9. Disc brake as claimed in any one of the preceding claims, **characterized in that** the at least one indentation (9, 10) of the brake cylinder (1) is formed by stamping.

## Revendications

1. Frein à disque pneumatique, comportant un étrier (2) de frein chevauchant un disque de frein, dans lequel, sur un rebord (3) de l'étrier (2) de frein, sont fixés un cylindre (1) de frein pouvant être alimenté en air comprimé et ayant une membrane se trouvant à l'intérieur et un poussoir de cylindre couplé à la membrane, ainsi qu'au moins une partie (4, 5) fonctionnelle supplémentaire, dans lequel une surface (15) latérale d'une partie (7) de boîtier, à proximité du rebord (3) de l'étrier (2) de frein, du cylindre (1) de frein est pourvue de la au moins une partie (4, 5) fonctionnelle ayant au moins une déformation (9, 10) au moins dans la région de recouvrement axialement par rapport au cylindre de frein, **caractérisé en ce que** la au moins une déformation (9, 10) est prévue dans la région d'un bord arrondi entre un fond (16) de la partie (7) de boîtier et une surface (15) latérale de forme cylindrique de cette partie (7) de boîtier.

2. Frein à disque suivant la revendication 1, **caractérisé en ce que** la ou les déformations (9, 10) s'étendent dans l'espace intérieur du cylindre (1) de frein, la ou les déformations (9, 10) étant formées de sorte que la membrane peut être déplacée librement ou approximativement librement dans la direction d'action.

3. Frein à disque suivant l'une des revendications précédentes, **caractérisé en ce que** le boîtier du cylindre (1) de frein est réalisé en plusieurs parties, notamment en deux parties.

4. Frein à disque suivant l'une des revendications précédentes, **caractérisé en ce qu'**une coiffe (12) ayant un trou (11) central pour permettre le déplacement axial du poussoir de cylindre (1) de frein s'étend à partir du fond (16) de la partie (7), de boîtier à proximité du rebord (3), de l'étrier (2) de frein.

5. Frein à disque suivant la revendication 4, **caractérisé en ce que** la au moins une déformation (9, 10) du cylindre de frein est réalisée de sorte que le volume du cylindre (1) de frein est supérieur à une valeur seuil à laquelle la force pouvant être appliquée au poussoir de cylindre (1) de frein ne peut pas passer en dessous d'une valeur minimum.

6. Frein à disque suivant l'une des revendications précédentes, **caractérisé en ce que** la au moins une déformation (6, 10) du cylindre (1) de frein est réalisée sous la forme d'une configuration aplatie.

7. Frein à disque suivant l'une des revendications 1 à 5, **caractérisé en ce que** la au moins une déformation (9, 10) du cylindre (1) de frein est réalisée sous la forme d'une déformation concave vue de l'extérieur du cylindre de frein.

8. Frein à disque suivant l'une des revendications précédentes, **caractérisé en ce que** le cylindre (1) de frein comporte au moins deux déformations (9, 10), qui sont à distance mutuellement l'une de l'autre.

9. Frein à disque suivant l'une des revendications précédentes, **caractérisé en ce que** la au moins une déformation (9, 10) du cylindre (1) de frein est formée par un poinçonnage.
